# EUROPÄISCHE PATENTSCHRIFT

(11) **EP 0 300 199 B1**
(45) Veröffentlichungstag und Bekanntmachung des Hinweises auf die Patenterteilung: **05.10.1994**
(21) Anmeldenummer: 88109649.9
(22) Anmeldetag: 16.06.1988
(51) Int. Cl.: B32B 5/20, C09D 5/18

(54) **Feuerhemmendes Schichtenelement und Verfahren**
Layered fire-resistant element
Elément stratifié coupe-feu

(30) Priorität: 21.07.1987 US 76016
(43) Veröffentlichungstag der Anmeldung: 25.01.1989
(73) Patentinhaber: Odenwald Chemie GmbH, 69250 Schönau (DE)
(72) Erfinder: Wesch, Ludwig, Prof.Dr., D-6900 Heidelberg (DE); Weiss, Edgar, D-6918 Neckarsteinach (DE)
(74) Vertreter: Müller, Hans-Jürgen, Dipl.-Ing.

(56) Entgegenhaltungen:
- DE-A- 2 165 029
- DE-A- 3 423 700
- US-A- 4 467 577

## Beschreibung

Die Erfindung bezieht sich auf ein feuerhemmendes Schichtenelement der im Oberbegriff des Patentanspruchs 1 genannten Gattung.

Ein feuerhemmendes Schichtenelement dieser Gattung ist bereits bekannt (DE-OS 34 23 700). Dabei wechseln Schaumbildnerschichten mit Stabilisierungsschichten ab. Die letztgenannten haben die Aufgabe, die Spalten- und Rissebildung durch das Schichtenelement zu verhindern, da sonst beim Aufschäumen der Schaumbildnerschichten jedenfalls außen eine zu bröckelige Struktur mit der Folge entsteht, daß beispielsweise bei Wind Teilschichten abgeblasen werden und die feuerhemmende Wirkung beeinträchtigt wird. Dabei wird empfohlen, die Stabilisierungsschicht mit mehr als 30 Gewichtsprozent, insbesondere mindestens 50 Gewichtsprozent faser- und/oder blättchenförmigen Füllstoffen, darunter insbesondere Glasfasern sowie ggf. Glimmer, Plastorite, Carbon- und/oder Polyamidfasern zu versehen. Darüber hinaus finden auch andere Füllstoffe, wie Carbonate des Magnesiums und Calciums oder deren Hydroxide und Silicate, Anwendung.

Der vorliegenden Erfindung liegt die Aufgabe zugrunde, die feuerhemmende Wirkung des Schichtenelements durch Auswahl besonders geeigneter Komponenten insbesondere hinsichtlich der Langzeitstabilität der feuerhemmenden Wirkung im Brandfall und bei großer Hitze noch zu verbessern, um stets reproduzierbar ausreichende Feuerhemmung selbst bei Gegenheizung über wesentlich mehr als 60 Min. zu erzielen. Diese Ergebnisse sollen auch beim Auftreten solcher mechanischer Kräfte, wie starker Wind, im Brandfall erreichbar sein, welche das Bestreben haben, jedenfalls Außenteile des aufgeschäumten bzw. aufgeblähten Schichtenelements abzutragen.

Die Erfindung ist im Patentanspruch 1 gekennzeichnet. In Unteransprüchen und der nachfolgenden Beschreibung sind weitere Ausbildungen derselben beansprucht und beschrieben.

Die Erfindung basiert auf der Erkenntnis, daß sich innerhalb der Gruppe von insbesondere faserförmigen, aber auch blättchenförmigen oder flockigen Carbonelementen solche befinden, die aufgrund ihrer physikalischen Eigenschaften, aber auch ihrer chemischen Zusammensetzung im Verbund mit dem Bindemittel, darunter insbesondere hydrophilem bzw. wasserhaltigem Epoxidharz und u. U. noch weiteren Füllmitteln, wie Silizium enthaltenden Glasfasern, die Aufgabe besonders gut erfüllen. Im Unterschied zu bisher bevorzugten reinen Graphitfasern sollten die Carbonelemente nach der Erfindung insbesondere folgende physikalische Eigenschaften aufweisen und als Fasern ausgebildet sein:

| | |
|---|---|
| Bruchdehnung: | mehr als 1 % |
| E-Modul: | bis zu 280 kN/mm² (GPa) |
| Dichte: | bis zu 1,8 g/cm³ |
| Zugfestigkeit: | mindestens 3 kN/mm² (MPa); |

Für die meisten Anwendungsfälle werden jedoch solche Carbonfasern bevorzugt, die eine Zugfestigkeit von weniger als 1 kN/mm², insbesondere eine solche von bis zu 0,8 kN/mm², aufweisen, welche eine Bruchdehnung von einigen Prozent, insbesondere 15 - 25 %, aufweisen.

Auch bei der vorliegenden Erfindung ist es erwünscht, daß die Stabilisierungsschicht das volle Aufschäumen der Schaumbildnerschichten (im Falle des Fehlens von Stabilisierungsschichten) verhindern, beispielsweise begrenzend auf weniger als 50 % der Aufschäumbarkeit (im Falle des Fehlens von Stabilisierungsschichten). Es sollte dafür gesorgt werden, daß keine großen Hohlräume beim Aufschäumen entstehen, sondern die Schaumbildnerschichten und bevorzugt auch die Stabilisierungsschichten im Falle eines mehrere Stabilisierungsschichten und mehrere Schaumbildnerschichten aufweisenden Mehrschichtenlaminats ein Mikrogefüge mit nur verhältnismäßig kleinen Poren bei Hitze von z.B. 550 °C erhalten..

Es hat sich gezeigt, daß auch die Art des chemischen Aufbaus der Carbonelemente die Ausbildung eines solchen Mikrogefüges begünstigt. Im Unterschied zu Graphitfasern als praktisch reinen Kohlenstoffasern sorgen nämlich die weiteren Elemente, darunter Sauerstoff, die in die bei der Erfindung angewendeten Carbonfasern eingebaut sind, für einen besseren und vor allem stabileren Gerüstaufbau. Aus diesem Grunde ist es auch empfehlenswert, nicht nur Stabilisierungsschichten, sondern auch Schaumbildnerschichten, insbesondere die der Außenseite zugewandten, mit einem Anteil solcher Carbonelemente zu versehen. Außer faserförmigen sind auch blättchenartige und flockenförmige geeignet. Der Aufbau eines gut mit den anderen Elementen verbundenen Carbongerüstes im Falle hoher Temperaturen von über 500 °C wird auch begünstigt durch die Zugabe von Melaminen. Kohlenstoffteilchen wirken dann gewissermaßen als "Kerne" zur Bildung des Kohlenstoffgerüstes. Kann von möglichst vielen solchen "Kernen" oder "Keimen" gleichzeitig der Aufbau eines Kohlenstoffgerüstes mit den die Carbonfasern umgebenden Materialien stattfinden, so wird die Ausbildung einer stabilen feinporigen Struktur trotz der jedenfalls begrenzten Aufschäumung der Schaumbildnerschicht bzw. Schaumbildnerschichten begünstigt. Die Verwendung isotroper, jedenfalls querisotroper Carbonfasern wird gegenüber stark anisotropen Carbonelementen bevorzugt.

Geeignete Carbonfasern sind beispielsweise HT (high-tensile) Carbonfasern, welche auch "hochfeste Carbonfasern" genannt werden, worunter beispielsweise die unter der Marke "T 300 TORAYCA" der Firma Toray Industries und die unter der Marke "XAS" der Firma Grafil bekannten Carbonfasern gehören.

Gut geeignet sind auch HST (high strain) Carbonfasern, sowie IM (intermediate-modulus) Carbonfasern. Besonders bevorzugt werden Carbonfasern auf Pechbasis, beispielsweise die unter der Marke "SIGRAFIL P" der Firma Sigri bekannten T-101 T Carbonfasern. Besonders gut geeignet sind auch die unter der Typenbezeichnung C-106 T bekannten Carbonfasern der Fa. Sigri mit einer durchschnittlichen Faserlänge von 6 mm und einem durchschnittlichen Faserdurchmesser von 18 µm. Der Kohlenstoffanteil solcher Fasern beträgt mindestens 95 % und der Sauerstoffanteil etwa 2 %.

Recht gute Eigenschaften werden auch bei Verwendung von Carbonfasern erzielt, welche durch eine oxidierende Temperaturbehandlung (Cyclisierung) von Homo- oder Copolimerisaten des PAN (Polyacrylnitril) erreicht werden. Bei diesem "Tempern" verliert das Material Kohlenstoff, Wasserstoff und Stickstoff, nimmt aber Sauerstoff auf, so daß die auch "preoxidierte Faser" genannte Carbonfaser auf PAN-Basis, beispielsweise die unter der Marke SIGRAFIL O der Firma Sigri bekannte Faser, etwa 60 - 68 % Kohlenstoff, 20 - 22 % Stickstoff, 4 - 12 % Sauerstoff und 2 - 4 % Wasserstoff neben anderen Elementen in geringeren Mengen aufweist.

Solche oxidierten Carbonfasern sollten 50 - 80 % Kohlenstoff und 4 - 20 % Sauerstoff aufweisen.

Es empfiehlt sich, Carbonfasern einer durchschnittlichen Faserlänge von mindestens 1 mm, insbesondere zwischen 3 oder 6 und 10 mm, mit einem durchschnittlichen Faserdurchmesser von mindestens etwa 10 µm, insbesondere 15 - 25 µm, zu verwenden.

Besonders günstige Ergebnisse hinsichtlich Mikrorissearmut der Schaumbildnerschichten und daher hinsichtlich Bruchgefahr werden dann erzielt, wenn Carbonfasern in größerer Länge von mehr als 1 cm einzeln oder zu Netzstrukturen, insbesondere weitmaschigen Netzen, verbunden und ein- oder sogar mehrfach in Stabilisierungsschichten eingebracht werden. Diese "Stützgewebe" oder Stütznetze können auch bis zu 50 % Fasern aus Glas, organischen Kunststoffen, insb. Aramide, wie die unter der Marke KEVLAR bekannte Faser aus Poly(1,4-)phenylenterephtalamid, und/oder Metalle aufweisen.

Der Anteil solcher Carbonfaserne an der Stabilisierungsschicht soll mehr als 20 %, insbesondere 40 bis 50 % betragen. Sofern solche Carbonfasern auch in der Schaumbildnerschicht verwendet werden, ist deren Anteil dort wesentlich geringer.

Anhand der Tabelle 1 sind Beispiele für bei der Erfindung verwendbare Carbonfasern beschrieben; dabei sind vor allem die in den beiden unteren Zeilen der Tabelle 1 genannten Carbonfasern bevorzugt.

Während die Schaumbildnerschicht im noch nicht aufgeschäumten Zustand durchschnittlich 0,5 - 3 mm Dicke besitzt, sollte jede Stabilisierungsschicht, die das Aufschäumen der Schaumbildnerschicht vermindert, 1 - 2 mm dick ausgebildet sein. Während die Schaumbildnerschicht unbehindert bzw. im ungesteuerten Zustand 10 - 20 cm aufschäumen würde, wird deren Aufschäumen durch die Steuerung der Stabilisierungsschicht nur die Hälfte und weniger betragen, also um mindestens 50 % vermindert. Die Stabilisierungsschicht kann im Brandfalle noch etwa 5 - 10 mm aufschäumen. Zum Aufschäumen empfiehlt es sich, Chlor-Phosphorester mit mindestens 12 % Phosphor und 34 % Chlor als Aufschäummittel in die Schaumbildnerschicht einzubauen. Die Chlorkomponente kann mindestens teilweise durch Brom ersetzt werden.

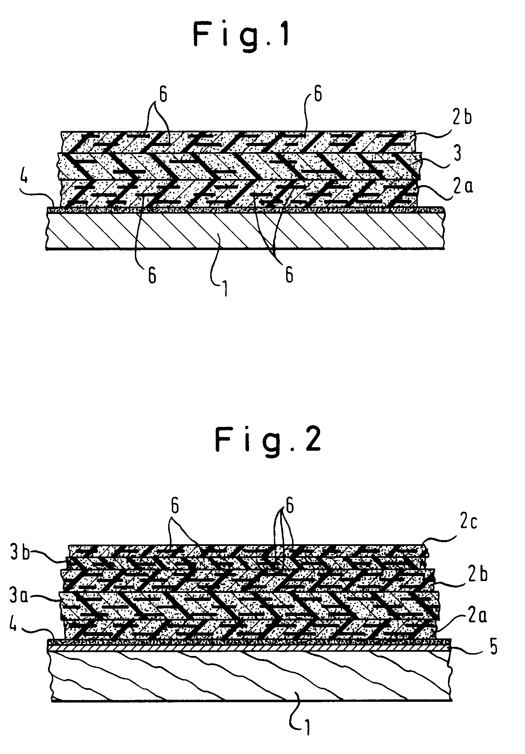

Ausführungsbeispiele sind anhand der Zeichnung noch näher erläutert. Dabei zeigen die Figuren 1 bis 4 schematische Teilschnitte aus Schichtenelementen.

Gemäß Fig. 1 sind auf die zu schützende Unterlage 1, auf der eine Haftungsvermittlerschicht 4 und im Falle von Stahl als Korrosionsschutz insb. Polyvinylbutyral oder Epoxidharzmittel aufgebracht sein können, zuerst die erste Stabilisierungsschicht 2a und darauf die erste Schaumbildnerschicht 3 aufgebracht, welche von der zweiten Stabilisierungsschicht 2b abgedeckt wird. Auch die Haftungsvermittlerschicht 4 wird durch die erste Stabilisierungsschicht 2a am starken Schäumen gehindert. Dabei hat es sich als sehr vorteilhaft erwiesen, wenn weitmaschige Netze als Carbonfasern 6 oder zumindest lange Fasern mit einer durchschnittlichen Faserlänge von mehr als 6 mm in die Stabilisierungsschicht 2a eingebracht sind. Diese beiden Schichten 4 und 2a sollten gleichzeitig Schutzschichten sein für den Fall, daß durch äußere Einwirkung, wie im Brandfall, fallende Gegenstände oder durch Spritzwasser, die Schaumbildnerschicht 3 verletzt werden sollte. Die mechanische Güte der Schicht läßt dann immer noch zu, daß ein Teil der Haftungsvermittlerschicht 4 noch weiter aufschäumt, auch wenn die Schichten 2b und 3 fehlen sollten. Damit ist der Brandschutz für eine weitere Zeit gewährleistet.

Gemäß Fig. 2 wird das Schichtenlaminat noch verbessert: Überall dort, wo schon bei niederen Temperaturen ein schnelles Aufschäumen stattfinden und der erste Schutz für die Unterlage 1 - hier mit einem Blech 5 überzogenes Holz - gegeben sein soll, werden eine zweite Schaumbildnerschicht 3b und eine dritte Stabilisierungsschicht 2c aufgebracht, während die anderen Schichten 2a, 3a und 2b die gleichen Funktionen wie schon oben geschildert haben. Die zweite Schaumbildnerschicht 3b und die dritte Stabilisierungsschicht 2a sind jedoch dünner ausgebildet, um das erste Aufschäumen zu forcieren. Gleichzeitig verhindern sie, daß die dickere, erste, d.h. die Haupt-Schaumbildnerschicht 3a zu stark und schnell beansprucht wird; dies fördert zusammen mit den Stabilisierungsschichten ein gleichmäßigeres Bilden der feinen Luft- oder Gasporen mit dein Kohlenstoffgerüst im Brandfall.

In dieser Anordnung ergibt sich ein weiterer Vorteil, weil die zweite Stabilisierungsschicht 2b eine Doppelfunktion übernimmt, und zwar eine das Aufschäumen steuernde, und zwar erheblich begrenzende bzw. hemmende Wirkung auf beide benachbarte Schaumbildnerschichten 3a, 3b. Eine entsprechende Doppelfunktion übt auch die erste Stabilisierungsschicht 2a aus. Die Stabilisierungsschichten 2a, 2b, 2c sind mit Carbonfasern 6 und u. U. zusätzlich mit blattchenförmigen Carbonelementen versehen.

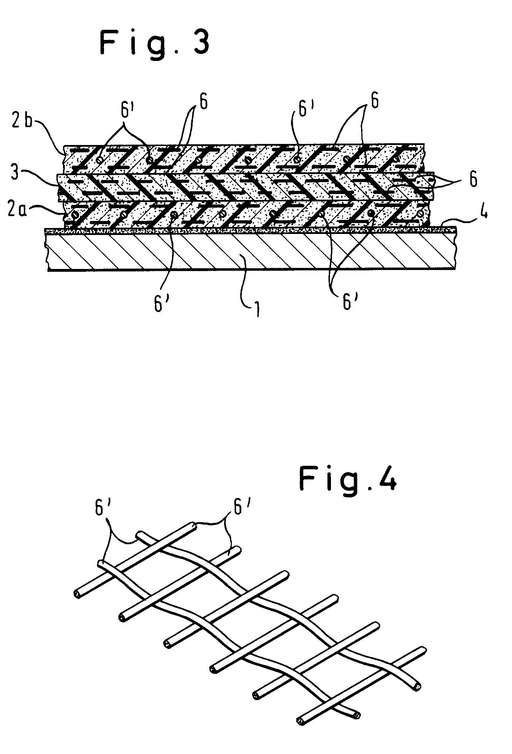

Vorteilhafterweise sind gem. Fig. 3 stark flächendeckende, aber offenmaschige (lichte Maschenweiten über 1 cm) Netzstrukturen aus Carbon- und evtl. weiteren Fasern eingebaut. Dabei sind Carbonfäden 6' zu Netzen gemäß Fig. 4 strukturiert und gemäß Fig. 3 in die Stabilisierungsschichten 2a, 2b eingebaut, die ebenso wie die Schaumbildnerschicht noch zusätzliche Carbonfasern 6 aufweisen.

Das Ergebnis im Brandfall sind immer glasartig starre bzw. harte Schichten, die gegen äußere mechanische Einwirkungen recht stabil sind. Alle äußeren Stabilisierungsschichten 2b bzw. 2c können noch durch eine Schutzschicht abgeschlossen werden, welche wasserabweisend und auch gegen Umweltbelastungen schützend wirken sollte. Als geeignet erwiesen sich Polyurethane jeglicher Art, in der Hauptsache Polyester aus Apidinsäure, Phtalsäure, Triol und Diol 80 % in Äthylglykolacetat zusammen mit aromatischen Diisocyanatgemischen.

Im folgenden werden nun Beispiele für Zusammensetzungen der einzelnen Schichten beschrieben; dabei ist festzustellen, daß das Verfahren des Schichtenauftragens mit allen Brandschutzsystemen verschiedener Basisprodukte durchgeführt werden kann. Auch die Art der Basisprodukte kann von Schicht zu Schicht verschieden sein, so daß eine Stabilisierungsschicht zusätzlich auch die Funktion einer Haftvermittlerschicht ausüben könnte.

### 1. Stabilisierungsschichten (2)

### Komponente A (S 3100)

a) 45 Gewichtsteile Epoxydharzemulsion unter Verwendung eines hydrophilen Epoxydharzes;
b) 5 Gewichtsteile nicht plastifiziertes vollveräthertes Melaminharz;
c) 11 Gewichtsteile Chlor-Phosphorester als Antiblaze;
d) 8 Gewichtsteile Mono-Dipentaerythrit;
e) 14 Gewichtsteile Ammoniumpolysulfid (gecoatet)
f) 4,5 Gewichtsteile Glimmer;
g) 4,5 Gewichtsteile Titan RD 2;
h) 8 Gewichtsteile geschnittene Carbonfasern der Marke SIGRAFIL P C-106T auf Pechbasis der Firma SIGRI GmbH mit einer durchschnittlichen Faserlänge von 6 mm und einem durchschnittlichen Faserdurchmesser von 18 µm.

Zuerst werden die flüssigen Produkte gemischt und dann die festen Bestandteile hinzugefügt; dabei werden die Carbonfasern mittels Dissolver langsam zugegeben.

Zu je 1 kg dieser Mischung werden anschließend mit Dissolver noch 200 g Glimmer und 30 g Aerosil oder nadelförmiges kristallisiertes Calciumsilikat (Marke PROMAXON DC 2 der Fa. Permat, Ratingen) sowie 100 g Äthanol oder ein anderes Lösungsmittel hinzugefügt.

### Komponente B (S 3111)

a) 88 Gewichtsteile Adduktorenhärter;
b) 8 Gewichtsteile Dicyandiamid;
c) 2 Gewichtsteile Wasser
d) 2 Gewichtsteile des o.a. nadelförmigen kristallisierten Calciumsilikats;
e) 10 Gewichtsteile Carbonfasern

Auf 1 kg der Komponente B können noch 30 g Aerosil kommen. 200 bzw. 250 g Glimmer und 100 g Äthanol oder ein Gemisch aus Methylenchlorid und Toluol im Verhältnis 60 : 40.

Die Mischung wird bei langsamen Zugeben der geschnittenen isotropen Carbonfasern auf Pechbasis über den Dissolver oder Dreiwalzenstuhl mindestens 1 Stunde verarbeitet.

Das Mischungsverhältnis der Komponente A zur Komponente B beträgt etwa 4 : 1 Gewichtsteile.

Die das Aufschäumen steuernde Wirkung der Stabilisierungsschicht kann in verschiedener Weise variiert werden.
a) Dies geschieht z.B. durch Veränderung des Basismaterials der Komponente A, indem der Gewichtsmengenanteil von a) zwischen 70 und 30 Gewichtsteilen eingestellt wird. Bei 30 Gewichtsteilen von a) sollte der "Verfestigungsfüllstoff" Glimmer oder Plastorit um das Doppelte erhöht werden.
   Im Brandfall entsteht dann aus den einzelnen Komponenten eine fest zusammenhängende Schicht aus Kohlenstoff, Glimmer und Aerosil, die bei 900 °C Brandtemperatur angeschmolzen werden und damit die Schaumbildnerschicht in ihrem Aufschäumen, d.h. der Schichtdicke, begrenzen.
b) Die gleiche Wirkung läßt sich durch die Dicke der Stabilisierungsschicht erreichen. Es empfiehlt sich das Einbringen oder auch Aufkleben (mittels z.B. schnellhärtendem Epoxidkleber) einer flächenübergreifenden insb. netzartigen Struktur von Carbonfasern in bzw. auf die Stabilisierungsschicht.

### 2. Schaumbildnerschichten (3) (S 3200)

### Komponente A:

a) 44 Gewichtsteile Epoxid-Novolakgemisch mit Verdünner;
b) 4 Gewichtsteile eines Lösungsmittelgemisches aus löslichen Melamin- und Benzoguanaminharzen;
c) 6 Gewichtsteile Melaminharz;
d) 20 Gewichtsteile aktiviertes Ammoniumpolyphosphat;
e) 15 Gewichtsteile Pentaerythrit;
f) 4,5 Gewichtsteile Glimmer;
g) 2 Gewichtsteile Titan RD 2;
h) 12 Gewichtsteile Chlorphosphorester als Antiblaze;
i) 7,5 Gewichtsteile geschnittene Carbonfasern auf Pechbasis wie oben genannt.

Auf 1 kg der Komponente A kommen noch 35 Gewichtsteile Aerosil R 805 oder nadelförmig Kristallisiertes Calciumsilikat und dazu 700 Gewichtsteile Äthanol oder ein Gemisch von Methylenchlorid mit Toluol im Verhältnis 60 : 40. Der Anteil des Äthanols läßt sich je nach Außentemperatur erhöhen oder vermindern; je nachdem, ob gestrichen oder gespritzt werden soll.

### Komponente B (S 3222)

a) 85 Gewichtsteile Polyamidoamid;
b) 10 Gewichtsteile Aminaddukt;
c) 5 Gewichtsteile der o.a. Carbonfasern auf Pechbasis.

Auf 100 Teile dieser Mischung kommen noch zusätzlich 30 g Glimmer und 25 Gewichtsteile eines weiteren Aminadduktes.

Diese Mischung wird langsam in die übrigen Bestandteile mit Dissolver eingerührt, vorteilhaft mit noch 10 g des Aerosils R 805 oder des o.a. Calciumsilikats oder entsprechende Gewichtsteile eines Glasfasergemisches mit Faserlängen zwischen 1 und 5 mm oder eine Bentones bzw. Bentonites. Das bei Hitze aufschäumende Material wird im Mischungsverhältnis zwischen Komponente A und Komponente B von 4 : 1 gemischt.

Die erfindungsgemäßen feuerhemmenden Schichtenelemente eröffnen ein weites Anwendungsgebiet, weil die schwierigen Probleme aufschäumbarer Materialien gelöst sind. Für jeden Anwendungsfall ist die geeignete Schaumstruktur und Schaumhöhe (Schichtdicke nach dem Aufschäumen) steuerbar. Ein Abweichen von der Einstellung ist praktisch nicht mehr möglich. Die Einhaltung eines einmal eingestellten Feuerwiderstandes kann von Anfang garantiert werden. Das Verfahren erreicht auch, daß mit der Formulation bisher festgestellte Unsicherheiten bei der Durchschreitung des thermoplastischen Zustandes eines Harzes verschwinden, weil die Art der Kombination von bei Hitze im wesentlichen nicht oder kaum aufschäumbarem Material mit einem bei Hitze stärker schäumbaren ein schnelles Durchschreiten dieses Zustandes ergibt. Damit wird ein Abrutschen der Schaumschichtkombination von der Unterlage oder von anderen Schichten verhindert und ein hoher Feuerwiderstand erreicht, der sogar einen so hohen von bis zu 120 min mit Gegenheizung erreichen kann.

Ein wichtiges Anwendungsgebiet sind Gebäude unter Verwendung von Stahlbauelementen und sonstigen Metallelementen. Sowohl innen als auch außen sind die Möglichkeiten einer guten Feuerhemmung offensichtlich. Dies ist ein großer Fortschritt vor allem bei Erdölbetrieben oder Off-Shore-Anlagen und auf militärischem Sektor. Die Feuerschutzvorschriften lassen sich mit Hilfe der Erfindung besser einhalten mit einer um mindestens etwa um 40 % verlängerten Langzeitstabilität gegenüber der Verwendung von Glasfasern und von mindestens etwa um 20 % gegenüber HM-Carbon- und Graphitfasern. Die Oberfläche des im Brandfall aufgeblähten Schichtenelements ist verhältnismäßig glatt, allenfalls nur körnig gekräuselt ohne Furchen und Aufrisse, die zum Abheben solcher thermisch isolierender Schaumstoffteile Anlaß gäben. Weder Wind noch Spritzwasser finden Angriffsmöglichkeiten, so daß der thermische Schutz auch noch dann gewährleistet ist, wenn sich schon starker Wind bis zu Sturm entwickelt hat und die Feuerwehr mit Löschmitteln, darunter starken Wasserstrahlen, ihre Löschaufgabe schon in Angriff genommen hat.

**Tabelle 1**

| Carbon-Fasern | Dichte g/cm³ | E-Modul kN/mm² | Zugfestigkeit kN/mm² | Bruchdehnung % |
|---|---|---|---|---|
| HT | 1,7 | 200 - 280 | 2 - 5,6 | 1,25 - 2,3 |
| HST | 1,8 | 240 | 4,4 - 4,8 | 1,8 - 2,0 |
| IM | 1,7 | 280 | 4,4 | 1,5 |
| Carbon-P C 106T (Sigrafil-P) | 1,65 | 30 | 0,6 | 2 |
| Carbon-PAN (Sigrafil SF 0) | 1,4 | 7 -10,5 | 0,21 - 0,28 | 15 - 21 |

## Patentansprüche

1. Feuerhemmendes Schichtenelement mit mindestens einer bei hohen Temperaturen aufschäumbaren Schaumbildnerschicht (3) und mindestens einer weiteren, zu dieser benachbarten, Carbonelemente aufweisenden Stabilisierungsschicht (2), die bei hohen Temperaturen eine verhältnismäßig stabile Struktur erhält und auch die Schaumbildnerschicht stabilisiert, dadurch gekennzeichnet,
daß Carbonfasern (6) mit einer
Bruchdehnung von über 1 % und einem
E-Modul von bis zu 280 kN/mm²
mindestens für die Stabilisierungsschicht (2) verwendet sind.

2. Schichtenelement nach Anspruch 1, dadurch gekennzeichnet,
daß Carbonfasern (6) mit einer Dichte von bis zu 1,8 g/cm³ und einer Zugfestigkeit von mehr als 2,5 kN/mm² verwendet sind.

3. Schichtenelement nach Anspruch 1, dadurch gekennzeichnet,
daß Carbonfasern (6) mit einer Dichte von bis zu 1,8 g/cm³ und einer Zugfestigkeit von weniger als 0,8 kN/mm² verwendet sind.

4. Schichtenelement nach Anspruch 2, dadurch gekennzeichnet,
daß Carbonfasern (6) auf Pech-Basis mit einem E-Modul von bis zu 50 kN/mm² verwendet sind.

5. Schichtenelement nach Anspruch 4, dadurch gekennzeichnet,
daß Carbonfasern (6) mit weniger als 98 % Kohlenstoff und etwa 2 % Sauerstoff verwendet sind.

6. Schichtenelement nach Anspruch 3, dadurch gekennzeichnet,
daß Carbonfasern (6) auf der Basis oxidierter PAN-Fasern mit einem E-Modul von bis zu 12 kN/mm² verwendet sind.

7. Schichtenelement nach einem der vorhergehenden Ansprüche dadurch gekennzeichnet,
daß Carbonfasern (6) mit mindestens 50 % Kohlenstoff und mindestens 3 % Sauerstoff verwendet sind.

8. Schichtenelement nach Anspruch 7, dadurch gekennzeichnet,
daß Carbonfasern (6) mit etwa 60 - 68 % Kohlenstoff, 4 - 12 % Sauerstoff und 20 - 22 % Stickstoff und ggf. einigen Prozent Wasserstoff verwendet sind.

9. Schichtenelement nach einem der vorhergehenden Ansprüche, dadurch gekennzeichnet,
daß IM-, HT- und/oder HST-Carbonfasern (6) verwendet sind.

10. Schichtenelement nach einem der vorhergehenden Ansprüche, dadurch gekennzeichnet,
daß geschnittene Carbon-Stapelfasern (6) mit einer durchschnittlichen Faserlänge von mindestens 1 mm und einem durchschnittlichen Faserdurchmesser von mindestens 10 µm verwendet sind.

11. Schichtenelement nach einem der vorhergehenden Ansprüche, dadurch gekennzeichnet,
daß Carbonfasern (6) mit einer durchschnittlichen Faserlänge zwischen 6 und 10 mm verwendet sind.

12. Schichtenelement nach einem der vorhergehenden Ansprüche, dadurch gekennzeichnet,
daß Carbonfasern (6) in netzartigen Strukturen angewendet sind.

13. Schichtenelement nach einem der vorhergehenden Ansprüche, dadurch gekennzeichnet,
daß Epoxidharz als Bindemittel für die Carbonfasern (6) der Stabilisierungsschicht (2) verwendet ist.

14. Schichtenelement nach Anspruch 13, dadurch gekennzeichnet,
daß hydrophiles bzw. wasserhaltiges Epoxidharz als Bindemittel verwendet ist.

15. Schichtenelement nach Anspruch 11 oder 12, dadurch gekennzeichnet,
daß Novolake gegebenenfalls mit reaktiven Verdünnern als Bindemittel für die Carbonfasern (6) verwendet sind.

16. Schichtenelement nach einem der vorhergehenden Ansprüche, dadurch gekennzeichnet,
daß blättchen- und/oder flockenförmige Carbonelemente in Form von Ruß sowie ggf. Glasfasern als zusätzlicher Füllstoff in der Stabilisierungsschicht (2) verwendet sind.

## Claims

1. A layered fire-resistant element comprising at least one foamer layer (3) to be foamed at high temperatures and at least a further stabilization layer (2) being adjacent to said layer, comprising carbon elements and obtaining a relatively stable structure at high temperatures and also stabilizing the foamer layer, characterized in
that carbon fibers (6) having an
elongation at rupture of more than 1 % and a
modulus of elasticity of up to 280 kN/mm²
are used for the stabilization layer (2) at least.

2. A layered element according to claim 1, characterized in
that carbon fibers (6) having a density of up to 1.8 g/cm³ and a tensile strength of more than 2.5 kN/mm² are used.

3. A layered element according to claim 1, characterized in
that carbon fibers (6) having a density of up to 1.8 g/cm³ and a tensile strength of less than 0.8 kN/mm² are used.

4. A layered element according to claim 2, characterized in
that pitch-based carbon fibers (6) having a modulus of elasticity of up to 50 kN/mm² are used.

5. A layered element according to claim 4, characterized in
that carbon fibers (6) comprising less than 98 % of carbon and about 2 % of oxygen are used.

6. A layered element according to claim 3, characterized in
that carbon fibers (6) on the basis of oxidized PAN fibers having a modulus of elasticity of up to 12 kN/mm² are used.

7. A layered element according to any of the preceding claims, characterized in
that carbon fibers (6) comprising at least 50 % carbon and at least 3 % oxygen are used.

8. A layered element according to claim 7, characterized in
that carbon fibers (6) comprising about 60 - 68 % of carbon, 4 - 12 % of oxygen and 20 - 22 % of nitrogen and optionally some percents of hydrogen are used.

9. A layered element according to any of the preceding claims, characterized in
that IM, HT and/or HST carbon fibers (6) are used.

10. A layered element according to any of the preceding claims, characterized in
that cut carbon staple fibers (6) having an average fiber length of at least 1 mm and an average fiber diameter of at least 10 µm are used.

11. A layered element according to any of the preceding claims, characterized in
that carbon fibers (6) having an average fiber length of between 6 and 10 mm are used.

12. A layered element according to any of the preceding claims, characterized in
that carbon fibers (6) in netted structures are used.

13. A layered element according to any of the preceding claims, characterized in
that an epoxy resin is used as a binder for the carbon fibers (6) of the stabilization layer (2).

14. A layered element according to claim 13, characterized in
that a hydrophilic or, respectively, aqueous epoxy resin is used as a binder.

15. A layered element according to claim 11 or 12, characterized in
that novolaks, optionally together with reactive diluents, are used as a binder for the carbon fibers (6).

16. A layered element according to any of the preceding claims, characterized in
that lamellar and/or flake-shaped carbon elements in the form of soot and optionally glass fibers are used as an additional filler in the stabilization layer (2).

## Revendications

1. Elément stratifié coupe-feu comportant au moins une couche de moussant (3) à être moussée à hautes températures et au moins une autre couche de stabilisation (2) comprenant des éléments de carbone, étant parallèle et adjacente à la première, laquelle couche obtient une structure relativement stable aux températures élevées et également stabilise la couche de moussant, caractérisé en ce que des fibres de carbone (6) ayant un
allongement à la rupture de plus de 1 % et un
coefficient d'élasticité de jusqu'à 280 kN/mm²
sont utilisés pour la couche de stabilisation (2) au moins.

2. Elément stratifié selon la revendication 1, caractérisé en ce que des fibres de carbone (6) ayant une densité de jusqu'à 1,8 g/cm³ et une résistance à la traction de plus de 2,5 kN/mm² sont utilisées.

3. Elément stratifié selon la revendication 1, caractérisé en ce que des fibres de carbone (6) ayant une densité de jusqu'à 1,8 g/cm³ et une résistance à la traction de moins de 0,8 kN/mm² sont utilisées.

4. Elément stratifié selon la revendication 2, caractérisé en ce que des fibres de carbone (6) sur la base de poix ayant un coefficient d'élasticité de jusqu'à 50 kN/mm² sont utilisées.

5. Elément stratifié selon la revendication 4, caractérisé en ce que des libres de carbone (6) ayant moins de 98 % de carbone et environ 2 % d'oxygène sont utilisées.

6. Elément stratifié selon la revendication 3, caractérisé en ce que des libres de carbone (6) sur la base de libres PAC oxydées ayant un coefficient d'élasticité de jusqu'à 12 kN/mm2 sont utilisées.

7. Elément stratifié selon l'une des revendications précédentes, caractérisé en ce que des libres de carbone (6) ayant au moins 50 % de carbone et au moins 3 % d'oxygène sont utilisées.

8. Elément stratifié selon la revendication 7, caractérisé en ce que des libres de carbone (6) ayant environ 60 - 68 % de carbone, 4 - 12 % d'oxygène, 20 - 22 % d'azote et éventuellement quelques pourcents d'hydrogène sont utilisées.

9. Elément stratifié selon l'une des revendications précédentes, caractérisé en ce que des fibres de carbone (6) IM, HT et/ou HST sont utilisées.

10. Elément stratifié selon l'une des revendications précédentes, caractérisé en ce que des fibres artificielles de carbone (6) coupées ayant une longueur de libres moyenne d'au moins 1 mm et un diamètre de libre d'au moins 10 µm sont utilisées.

11. Elément stratifié selon l'une des revendications précédentes, caractérisé en ce que des libres de carbone (6) ayant une longueur de libres moyenne entre 6 et 10 mm sont utilisées.

12. Elément stratifié selon l'une des revendications précédentes, caractérisé en ce que des libres de carbone sont utilisées dans des structures réticulées.

13. Elément stratifié selon l'une des revendications précédentes, caractérisé en ce que une résine époxy est utilisée comme liant pour les libres de carbone (6) de la couche de stabilisation (2).

14. Elément stratifié selon la revendication 13, caractérisé en ce qu'une résine époxy hydrophile ou, respectivement, aqueuse est utilisée comme liant.

15. Elément stratifié selon la revendication 11 ou 12, caractérisé en ce que des novolaques sont éventuellement utilisées avec des diluants réactives comme liant pour les fibres de carbone (6).

16. Elément stratifié selon l'une des revendications précédentes, caractérisé en ce que des éléments de carbone lamelliformes ou en flocons sous la forme de suie et éventuellement des libres en verre sont utilisées comme liant additionnel dans la couche de stabilisation (2).
